# EUROPEAN PATENT SPECIFICATION

(11) **EP 3 827 061 B1**
(45) Date of publication and mention of the grant of the patent: **22.01.2025**
(21) Application number: 18927533.2
(22) Date of filing: 24.07.2018
(51) Int. Cl.: C09J 125/08, C09J 153/02

(54) **HOT MELT ADHESIVE COMPOSITION HAVING LOWER MELT VISCOSITY**
SCHMELZHAFTKLEBERZUSAMMENSETZUNG MIT NIEDRIGERER SCHMELZVISKOSITÄT
COMPOSITION ADHÉSIVE THERMOFUSIBLE OFFRANT UNE PLUS FAIBLE VISCOSITÉ À L'ÉTAT FONDU

(43) Date of publication of application: 02.06.2021
(73) Proprietor: Henkel AG & Co. KGaA, 40589 Düsseldorf (DE)
(72) Inventor: LI, Weiyi, Foshan, Guangdong 528216 (CN); CHEN, Minrui, Shanghai 201615 (CN)
(86) International application number: PCT/CN2018/096758
(87) International publication number: WO 2020/019146

(56) References cited:
- EP-A1- 2 826 831
- CN-A- 102 061 140
- US-A- 5 910 527
- US-A1- 2008 221 247
- US-A1- 2011 021 102
- US-A1- 2012 259 050
- US-A1- 2015 017 868
- US-A1- 2017 029 668

## Description

### Technical field

This invention relates to a hot melt adhesive composition. In particular, the present invention relates to a hot melt pressure sensitive adhesive composition having lower melt viscosity under lower application temperature, excellent peel strength when cured, and lower odour.

### Background of the invention

Hot melt adhesives are applied to a substrate while in its molten state and cooled to harden the adhesive layer. Such adhesives are widely used for various commercial and industrial applications such as product assembly and packaging, and have been widely used in the non-woven industry to make baby diapers and adult incontinence products. In these applications, adhesive is applied to at least one substrate such as, for example, a film substrate (e.g., polyethylene), a non-woven substrate (e.g., polyolefin), or an elastic substrate (e.g., spandex) for binding the substrate to a second similar or different substrate.

Hot melt adhesives based on styrene block copolymers have been used commercially as base polymers for hot melt adhesives and have found wide-spread use in nonwoven construction applications, e.g., disposable absorbent articles such as diapers, feminine hygiene articles, and adult incontinence devices. These products are typically applied at temperatures above 150 °C. Lowering the application temperature of adhesives used in the manufacture of such products below 150 °C would improve the thermal aging in application equipment and reduce issues with heat sensitive or lower basis weight substrates. However, in order to apply the adhesive below 150 °C using current application technology, the viscosity must be low enough to spray and extrude cleanly. To lower viscosity, lower molecular weight polymers and higher levels of diluent have been used at the expense of performance of the hot melt adhesive. These approaches may result in lower mechanical strength and more importantly less peel strength.
US 2008/0221247 A1 discloses a thermofusible adhesive comprising a styrene block copolymer, wherein the styrene block copolymer is a block copolymer or mixture of block copolymers that is obtained from at least one styrene monomer and at least one second monomer which forms a two-phase medium with the styrene monomer, the two-phase medium having a styrene phase and a non-styrene phase, the styrene block copolymer including a diblock, triblock, multi-block, linear, radial or star-shaped structure, whereby the second monomer is an intermediate block, whereby said styrene block copolymer includes: a mass percent of the styrene phase in the polymer that is between 10 and 40%;
a mass percent of diblock structures that is between 0 and 50%; and a flow index (MFI=Melt Flow Index) according to condition No. 10 of the NFT 51-016 standard of between 2 and 70 g10 min. The adhesive also comprises tackifying resins, at least one thermofusible wax; and a liquid plasticizer.
US 2015/017868 A1 discloses a hot melt adhesive composition, comprising a blend of the following components: about 5% to about 40% by weight of an ethylene vinyl acetate copolymer; about 30% to about 70% by weight of a tackifying resin; about 2% to about 30% by weight of a hydrogenated styrenic block copolymer; about 2% to about 40% by weight of a liquid plasticizer; and about 0% to about 5% by weight of a stabilizer; wherein the components total 100% by weight of the composition, and the viscosity of the composition is equal to or less than about 20,000 centipoise at 325° F.

There is a continuing need for a hot melt adhesive that can be applied at low temperature, i.e., has lower melt viscosity even at a temperature below about 150 °C, which maintains excellent peel strength to substrate and low odour, when cured. Such attributes would make the adhesives particularly well-suited for use in the manufacture of disposable articles. The invention is directed to this need.

### Summary of the invention

The present invention provides a hot melt adhesive composition which overcomes at least one of the abovementioned disadvantages of conventional hot melt adhesives. The hot melt adhesive composition in this invention could significantly reduce the melt viscosity when heated under application temperature. The hot melt adhesive composition in this invention possess excellent peel strength to substrates used in absorbent articles when cured. Besides, the hot melt adhesive composition in this invention has low odour when cured.

The present invention provides a hot melt adhesive composition, comprising
(1) 16% to 30% by weight of a styrene block copolymer, having a saturated midblock, a melt flow rate of at least 25 g/10 minutes (190°C, 2.16 kg) and a diblock content of no greater than 10% by weight,
(2) 40% to 65% by weight of a tackifier,
(3) 5% to 30% by weight of a plasticizer, and
(4) 0% to 10% by weight of a polyolefin,
wherein the weight ratios of the components are based on the total weight of the hot melt adhesive composition.

The present invention also provides a disposable absorbent article comprising a cured product of the hot melt adhesive composition according to the present invention.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or process steps.

The recitation of numerical end points includes all numbers and fractions subsumed within the respective ranges, as well as the recited end points.

Unless otherwise defined, all terms used in the disclosing the invention, including technical and scientific terms, have the meaning as commonly understood by one of the ordinary skill in the art to which this invention belongs to. By means of further guidance, term definitions are included to better appreciate the teaching of the present invention.

According to the present invention, the hot melt adhesive composition comprises a styrene block copolymer, having a saturated midblock, a melt flow rate of at least 25 g/10 minutes (190°C, 2.16 kg), and a diblock content of no greater than 10% by weight.

The styrene block copolymer includes an aromatic vinyl polymer block and a saturated midblock, preferably a hydrogenated conjugated diene polymer block. The blocks can be arranged in a variety of configurations including, e.g., linear, branched, radial, star and combinations thereof. The aromatic vinyl polymer block can be derived from a variety of aromatic vinyl compounds including, e.g., styrene, alpha-methylstyrene, beta-methylstyrene, o-, m-, p-methylstyrene, t-butylstyrene-2,4,6-trimethylstyrene, monofluorostyrene, difluorostyrene, monochlorostyrene, dichlorostyrene, methoxystyrene, 1,3-vinylnaphthalene, vinylanthracene, indene, acenaphthylene, and combinations thereof. The hydrogenated diene polymer block can be derived from a variety of diene-containing compounds including, e.g., isoprene, butadiene, hexadiene, 2,3-dimethyl-1,3-butadiene, 1,3-pentadiene, and combinations thereof. Useful styrene block copolymers include, e.g., triblock, multi-arm, and radial copolymers including, e.g., styrene-ethylene/butene-styrene (SEBS), styrene-ethylene/propylene-styrene (SEPS), styrene-ethylene-ethylene/propylene-styrene (SEEPS), styrene/isobutylene/styrene (SIBS), and combinations thereof.

The melt flow rate of the styrene block copolymer is at least 25 g/10 minutes (190°C, 2.16 kg), and preferably at least 30 g/10 minutes (190°C, 2.16 kg).

Preferably, the diblock content of the styrene block copolymer is no greater than 5% by weight, no greater than 3% by weight, or even no greater than 1% by weight, based on the weight of the styrene block copolymer.

The styrene block copolymer can have a styrene content of at least 10% by weight, at least 15% by weight, at least 18% by weight, no greater than 35% by weight, no greater than 40% by weight, from 10% to 40% by weight, from 15% to 40% by weight, from 18% by weight to 35% by weight, from 18% by weight to 30% by weight, or even from 20% to 30% by weight, based on the weight of the styrene block copolymer.

Preferably, the styrene block copolymer contains essentially no, and preferably no unsaturated mid-blocks. Namely, the mid-blocks are saturated, or hydrogenated from diene polymer block. The suitable styrene block copolymers in the present invention include SEBS, for example KRATON MD 1648 commercially available from Kraton Polymers US LLC.

The styrene block copolymer is present in an amount of 16% to 30% by weight, preferably 20% to 30% by weight, and more preferably 20% to 28% by weight, based on the total weight of the hot melt adhesive composition. If the content of the styrene block copolymer is smaller than 16%, the peel strength of the cured product may not be satisfactory. If the content of the styrene block copolymer is greater than 30%, the melt viscosity of the adhesive composition may be overly higher, and the peel strength of the cured product after summit spraying will be interior.

The hot melt adhesive composition may optionally contain styrene block copolymer having an unsaturated midblock. If present, the amount of the styrene block copolymer having an unsaturated midblock is not greater than 7% by weight, preferably no greater than 5% based on the total weight of the hot melt adhesive composition. Examples of such unsaturated styrene block copolymer include styrene-butadiene-styrene (SBS), styrene-isoprene-styrene (SIS), styrene-butadiene-isobutylene-styrene (SBBS), styrene-isoprene-butadiene-styrene (SIBS), and combination thereof. Examples include KRATON D 1162 commercially available from Kraton Polymers US LLC, YH 1209 from SINOPEC, and Taipol 4230 from TSRC.

The styrene block copolymer used in the present hot melt adhesive composition can improve the application window when the adhesive composition is applied. The term "application window" means the range of application conditions in which hot melt adhesive compositions are used well in manufacturing lines. For disposable articles, the application window refers to the conditions including spray temperature, air pressure, spray pattern, open time, setting time, green strength etc. It is very important for hot melt adhesives to have a broad application window, in order to reduce machine downtime and scrap as well as to make adhesive suitable for various working conditions. For example, on a manufacturing line of baby diapers, the hot melt adhesive is spray coated from the nozzle onto the first substrate, then the substrate moves forward for 10 meters on the conveyor, costing 2 seconds as the open time for bonding of this position. The hot melt adhesive should remain tacky within the open time and therefore after 2 seconds it is still able to bond to the second substrate. Modern high-speed manufacturing lines of disposable articles run at a speed up to 400 to 500 meters per minute, once the hot melt adhesive does not fall in the application window, it is very likely that the bonding performance of hot melt adhesive cannot meet the requirement of continuous production. In another example, a manufacturing line does not always fix the production conditions. Sometimes operating conditions like line speed, types of substrates, environmental temperature may fluctuate or change, requiring the hot melt adhesive to possess a wide application window in order to cater to various working conditions, e.g. the hot melt adhesive should be able to bond to various types of substrates well, or the hot melt adhesive should remain tacky under extremely low temperatures in the winter in a certain open time. In this disclosure, SEBS helps to provide improved elasticity and prolonged open time, also featured with low odour. The physical performance of the formulation with SEBS is comparable to traditional formula containing SBS or SIS or a combination of both.

According to the present invention, the hot melt adhesive composition comprises a tackifier. Suitable tackifiers include any compatible resins or mixtures thereof such as, natural or modified rosins such, for example, as gum rosin, wood rosin, tall oil rosin, distilled rosin, hydrogenated rosin, dimerized rosin, and polymerized rosin; glycerol and pentaerythritol esters of natural or modified rosins, such, for example as the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; copolymers and terpolymers of natural terpenes, e.g., styrene/terpene and D-methyl styrene/terpene; polyterpene resins having a softening point, as determined by ASTM method E28,58T, of from 80° to 150°C; the latter polyterpene resins generally resulting from the polymerization of terpene hydrocarbons, such as the bicyclic monoterpene known as pinene, in the presence of Friedel-Crafts catalysts at moderately low temperatures; also included are the hydrogenated polyterpene resins; phenolic modified terpene resins and hydrogenated derivatives thereof, for example, as the resin product resulting from the condensation, in an acidic medium, of a bicyclic terpene and phenol; aliphatic petroleum hydrocarbon resins having a Ball and Ring softening point of from 70° to 135°C; the latter resins resulting from the polymerization of monomers consisting of primarily of olefins and diolefins; also included are the hydrogenated aliphatic petroleum hydrocarbon resins; alicyclic petroleum hydrocarbon resins and the hydrogenated derivatives thereof; and aliphatic/aromatic or cycloaliphatic/aromatic copolymers and their hydrogenated derivatives.

Preferred tackifiers for use herein include polyterpenes, aliphatic resins, cycloaliphatic resins, aliphatic/aromatic, cycloaliphatic/aromatic, and natural and modified rosin esters. More preferred are aliphatic resins, cycloaliphatic resins, polyterpenes, natural and modified rosin esters and mixtures thereof. In particular, the tackifier is hydrogenated aliphatic C5 resin or dicyclopentadiene resin. Examples of commercially available tackifiers are, for example, C100R, C100W, H130R, and H130W from Eastman; H5-1000 and H5-1001 from Henghe China; SU90, SU100, SU120 and SU130 from Kolon Industries; I-Marv P90, I-Marv P100, and I-Marv P120 from Idemitsu; Regalite R1100, Regalite R1120, and Regalite S1100 from Eastman; JH-6100 and JH-6125 from Jinhai Chenguang.

The tackifier is present in an amount of 40% to 65% by weight, and preferably 45% to 62% by weight, based on the total weight of the hot melt adhesive composition. If the content of the tackifier is smaller than 40%, the melt viscosity of the adhesive composition may be overly high, the peel strength of the cured product may not be satisfactory. If the content of the styrene block copolymer is greater than 62%, the melt viscosity of the adhesive composition may also be deteriorated.

In addition, the hot melt adhesive according to the present invention also contain plasticizers. The plasticizers are added for the purpose of lowering the melt viscosity of hot melt adhesives, and to contribute softening, and enhance wetting of the subject material, and are not specifically limited as long as they are mutually soluble with the styrene block copolymers, and provide a hot melt adhesive according to the purpose of the present invention.

The plasticizers may be, for example, paraffinic oils, naphthenic oils or aromatic oils. In particular paraffinic oils and/or naphthenic oils are preferable, and paraffinic oils, being colorless and odorless, are particularly preferable.

The plasticizers may be commercially available, including for example white mineral oil LP 150, LP 350 manufactured by Kukdong Oil and Chemical Co., Diana Fresia S-32, Diana Process Oil PW-90, Daphne Oil KP-68, or manufactured by Idemitsu Kosan Co., Ltd., Enerper M1930 manufactured by BP Chemicals, Ltd., Kaydol manufactured by Crompton Ltd., Primol 352 manufactured by Exxon Inc., or KN 4006, 4008, 4010 from Lubricant Company of PetroChina, Nyflex 222B from Nynas, PS white mineral oil from PetroChina Process Oil NS-100 manufactured by Idemitsu Kosan Co., Ltd. These may be used singly or in combination.

The hot melt adhesive according to the present invention may further contain a polyolefin in an amount no greater than 10%, and preferably no greater than 5%. If the content of the polyolefin is greater than the above range, the peel strength of the cured product may be significantly decreased. In one embodiment, the hot melt adhesive according to the present invention contains essentially no, and preferably no polyolefin.

The polyolefin may be amorphous poly-α-olefin which is a polymer that can include random copolymers or terpolymers of ethylene, propylene, and butene, and other substantially amorphous or semi-crystalline propylene-ethylene polymers. Suitably, the amorphous poly-α-olefin (APAO) includes between 20% and 80% copolymers or terpolymers and between 20% and 80% other substantially amorphous or semi-crystalline propylene-ethylene polymers. Alternatively, the APAO includes between 30% and 70% copolymers or terpolymers and between 30% and 70% other substantially amorphous or semi-crystalline propylene-ethylene polymers. As yet another alternative, the APAO includes between 40% and 60% copolymers or terpolymers and between 40% and 60% other substantially amorphous or semi-crystalline propylene-ethylene polymers. APAO may be a 1-butene copolymer with ethylene or propylene, or a 1-butene terpolymer with ethylene and propylene, having a number-average molecular weight of from 5,000 to 30,000, specifically 10,000 to 20,000. The 1-butene copolymer should include 20% to 65% by weight 1-butene, or 30% to 55% by weight 1-butene, and a balance of the comonomer or monomer. Alternatively, the APAO may include an ethylene-propylene copolymer having up to 80% ethylene. An example of a commercially available APAO suitable for use in the invention is Rextac (Rexene LLC), Eastoflex and Aerafin (Eastman Corpoartion) and Vestoplast (Evonik Corporation).

The hot melt adhesive according to the present invention may contain a variety of other additives as necessary. Examples of such additives may include stabilizers, waxes, or fine particulate fillers, and the like.

Stabilizers are substances blended in for the purpose of enhancing the stability of hot melt adhesives as well as to prevent reduction of molecular weight of the hot melt adhesive due to heat, or to promote gelling, add color, or prevent odor and the like, and are not specifically limited so long as the purpose of the hot melt adhesive according to the present invention is achieved. Stabilizers may also be, for example, anti-oxidants or ultraviolet ray absorbents.

Anti-oxidants may include, for example, phenolic anti-oxidants, sulfur-related antioxidants, or phosphorus-related anti-oxidants. Ultraviolet ray absorbents may include, for example, benzotriazol related ultraviolet ray absorbents, or benzophenone related ultraviolet ray absorbents. Lactone stabilizers may also be added. These may be used either singly or in combinations. Examples of commercially available anti-oxidants include hindered phenol, phosphite, thiodipropionate and the mixtures of above. Typical commercial examples of hindered phenol are Evernox 10GF / 1726 from Everspring, Irganox 1010 / 1726 from BASF, Thanox 1010G / 1726 from Rianlon; Commercial exampels of phosphite include Everfos 168 from Everspring, Irgafos 168 from BASF, Thanox 168 from Rianlon; Commercial examples of thiodipropionate include Thanox 412S / DSTP from Rianlon, ADK AO 412S from Adeka, Sumilizer TP-D from Sumitomo.

The waxes are those generally used in hot melt adhesives and are not specifically limited as long as a hot melt adhesive according to the purpose of the present invention is obtained. Specifically, these may include for example synthetic waxes such as Fischer-Tropsh wax, petroleum waxes such as paraffin wax or microcrystalline wax, or natural waxes such as castor wax. Typical commercial example of Fischer-Tropsh wax is Sasolwax H1 from Sasol Wax, AC-400 from Honeywell; MC-400 from Marcus Oil Company, Epolene C-18 from Eastman Chemical, and AC-575P from Honeywell.

The hot melt adhesive according to the present invention may further contain particulate fillers. Any fine particulate filler in general use may be used without limitation so long as a hot melt adhesive according to the purpose of the present invention is obtained. The fine particulate fillers may include for example, mica, calcium carbonate, kaolin, talc, titanium oxide, diatom earth, urea resins, styrene particles, baked clay, starch, and the like. The form thereof is preferably spherical, and the dimensions (diameter if spherical) are not specifically limited.

The hot melt adhesive composition according to the present invention may be manufactured by mixing the styrene block copolymer, the tackifier, the plasticizer, as well as other additives as necessary, using commonly known methods of manufacture of hot melt adhesives. For example, manufacturing may be by blending the aforementioned components in the prescribed quantities, and melting them by heating. The order of addition of each component, the method of heating etc. is not specifically limited as long as a hot melt adhesive composition according to the purpose is obtained.

In a preferred embodiment, the hot melt adhesive composition comprises:
(1) 20% to 28% by weight of a styrene block copolymer, having a saturated midblock, a melt flow rate of at least 25 g/10 minutes (190°C, 2.16 kg) and a diblock content of no greater than 10% by weight,
(2) 45% to 62% by weight of a tackifier,
(3) 15% to 20% by weight of a plasticizer, and
(4) 0% to 5% by weight of a polyolefin,
wherein the weight ratios of the components are based on the total weight of the hot melt adhesive composition.

In one embodiment, the hot melt composition according to the present invention has a melt viscosity of no greater than 4,000 centipoises (cPs), and preferably no greater than 3,500 cPs at 140°C.

In another embodiment, the hot melt composition according to the present invention has a softening point of no less than 60°C, and preferably no less than 70°C.

In yet another embodiment, the hot melt adhesive composition of the present invention has an odor score lower than 2.3 when cured. In some embodiments, the hot melt adhesive composition preferably has an odor score less than or equal to 2.2 when cured. The test method is detailed in the Example section of the present application.

In yet another embodiment, the hot melt composition according to the present invention has a peel strength to polyethylene plate of no less than 10 N/inch, with a coating weight of 50 gsm (grams per square meter). The test method is as follows. 50 gsm of the hot melt adhesive composition was coated onto a PET film, covered with a release film. the laminated sample was cooled to room temperature for 24 hours. Then the release film was removed, and the hot melt adhesive composition was adhered to a PE plate, laminated with a 2 kg roller back and forth with a speed of 300 mm/min. The laminated sample was dwelled for 30 min and then the 180° peel strength was tested on an Instron 3365 tensile strength tester with a speed of 50 mm/min.

In yet another embodiment, the hot melt composition according to the present invention has a peel strength to polyethylene film by summit spraying of no less than 0.6 N/inch, with a coating weight of 2 gsm. The coating temperature was set at the point where melt viscosity is around 2500 cPs. The hot melt was sprayed onto a substrate from a 'summit' nozzle at a certain temperature at which the melt viscosity is around 2500 cPs, then the substrate was laminated onto another substrate within 1 second at a machine speed of 100 m/min.

The composition of hot melt adhesive in this invention can be obtained by blending the mixtures of solid components under high temperature, e.g. above 130°C, so that solid can be melted and fully blended and then homogenized with other components. Any feasible blending methods that are known in the art can be adopted to prepare a homogeneous mixture.

The hot melt adhesive composition in this invention can be used in the application for disposable absorbent products, including baby diapers, feminine napkins and adult incontinent articles. The application equipment of hot melt adhesive is provided by Nordson, ITW, Dynatec etc. Typically the application equipment is composed of melting tank, hose and application head. The hot melt adhesive is pre-melted in the tank which is set at a certain temperature, e.g. 130°C to become liquid, then transferred to the head by the hose, and finally spray coated with the help of high pressure hot air or directly slot coated onto substrates to obtain a cured product of the hot melt adhesive composition. A preferred example of such application is summit spraying.

Substrates available for this application include but are not limited to non-woven, PE film, elastic films, lycra elastic strand, tissue etc. The lamination may include PE bonding to non-woven, tissue bonding to PE/non-woven, lycra elastic strand bonding to PE/non-woven.

The following examples are intended to assist one skilled in the art to better understand and practice the present invention. The scope of the invention is not limited by the examples but is defined in the appended claims. All parts and percentages are based on weight unless otherwise stated.

### Examples

The following materials were used in the examples.

LP 150 is colourless, viscous mineral oil commercially available from Kukdong Korea.

Evernox 10GF (pentaerythritol tetrakis (3-(3,5-di-tert-butyl-4-hydroxyphenyl)propionate)) and Everfos 168GF (tris (2,4-di-tert-butylphenyl) phosphite) are antioxidants commercially available from Everspring.

Sasolwax H1 is a Fischer Tropsch wax, with a melting point of 100°C, commercially available from Sasol Wax.

Kraton MD 1648 is a synthetic SEBS block copolymer with a melt flow rate of greater than 30g/10min at 190°C, 2.16kg, a styrene content of 20%, and a diblock content is 0%, commercially available from Kraton.

Kraton MD 1653 is a synthetic SEBS block copolymer with a melt flow rate of 20g/10min at 190°C, 2.16kg, a styrene content of 30%, and a diblock content of 0%, commercially available from Kraton.

G1652 is a synthetic SEBS block copolymer with a solution viscosity of 4200cps (25%, in toluene), a styrene content of 13%, and a diblock content is 30%, commercially available from Kraton.

Kraton D1162PT is a synthetic SIS block copolymer with a solution viscosity of 120cps (25%, in toluene) a styrene content of 44%, and a diblock content is 0%, commercially available available from Kraton.

Taipol 4230 is a synthetic SBS block copolymer with a solution viscosity of 500cps (25%, in toluene), a styrene content of 37.5%, and a diblock content is 0%, commercially available from TSRC.

SU 100 is a hydrogenated DCPD aliphatic petroleum tackifier with a softening point of 100°C, commercially available from Kolon.

SU 90 is a hydrogenated DCPD aliphatic petroleum tackifier with a softening point of 90°C, commercially available from Kolon.

Aerafin 17 is a propylene-based olefin polymer with a melt viscosity of 1700 cPs at 190° C, commercially available from Eastman.

### Example 1 (Ex 1)

17 g of LP 150, 0.5 g of Evernox 10GF, 0.5 g of Everfos 168GF, 20 g of Kraton MD 1648, 62 g of SU 90 were added in metal mixer which is pre-heated to 160°C. The mixture was stirred for 120 min until homogeneous with a vacuuming system to protect the sample from oxidation as well as to remove bubbles. The obtained hot melt adhesive composition was light colour liquid at 160°C and could be poured out onto a release film and cooled down to become solid.

### Example 2

20 g of LP 150, 0.5 g of Evernox 10GF, 0.5 g of Everfos 168GF, 1 g of Sasolwax H1, 20 g of Kraton MD 1648, 58 g of SU 100 were added in metal mixer which is pre-heated to 160°C. The mixture was stirred for 120 min until homogeneous with a vacuuming system to protect the sample from oxidation as well as to remove bubbles. The obtained hot melt adhesive composition was light colour liquid at 160°C and could be poured out onto a release film and cooled down to become solid.

### Example 3

18 g of LP 150, 0.5 g of Evernox 10GF, 0.5 g of Everfos 168GF, 23 g of Kraton MD 1648, 58 g of SU 100 were added in metal mixer which is pre-heated to 160°C. The mixture was stirred for 120 min until homogeneous with a vacuuming system to protect the sample from oxidation as well as to remove bubbles. The obtained hot melt adhesive composition was light colour liquid at 160°C and could be poured out onto a release film and cooled down to become solid.

### Example 4

18 g of LP 150, 0.5 g of Evernox 10GF, 0.5 g of Everfos 168GF, 28 g of Kraton MD 1648, 53 g of SU 100 were added in metal mixer which is pre-heated to 160°C. The mixture was stirred for 120 min until homogeneous with a vacuuming system to protect the sample from oxidation as well as to remove bubbles. The obtained hot melt adhesive composition was light colour liquid at 160°C and could be poured out onto a release film and cooled down to become solid.

### Example 5 (not an example of the invention)

18 g of LP 150, 0.5 g of Evernox 10GF, 0.5 g of Everfos 168GF, 33 g of Kraton MD 1648, 48 g of SU 100 were added in metal mixer which is pre-heated to 160°C. The mixture was stirred for 120 min until homogeneous with a vacuuming system to protect the sample from oxidation as well as to remove bubbles. The obtained hot melt adhesive composition was light colour liquid at 160°C and could be poured out onto a release film and cooled down to become solid.

### Example 6

18 g of LP 150, 0.5 g of Evernox 10GF, 0.5 g of Everfos 168GF, 20 g of Kraton MD 1648, 61 g of SU 90 were added in metal mixer which is pre-heated to 160°C. The mixture was stirred for 120 min until homogeneous with a vacuuming system to protect the sample from oxidation as well as to remove bubbles. The obtained hot melt adhesive composition was light colour liquid at 160°C and could be poured out onto a release film and cooled down to become solid.

### Comparative Example 1 (CE 1)

18 g of LP 150, 0.5 g of Evernox 10GF, 0.5 g of Everfos 168GF, 33 g of Kraton MD 1648, 48 g of SU 100 were added in metal mixer which is pre-heated to 160°C. The mixture was stirred for 120 min until homogeneous with a vacuuming system to protect the sample from oxidation as well as to remove bubbles. The obtained hot melt adhesive composition was light colour liquid at 160°C and could be poured out onto a release film and cooled down to become solid.

### Comparative Example 2

18 g of LP 150, 0.5 g of Evernox 10GF, 0.5 g of Everfos 168GF, 38 g of Kraton MD 1648, 43 g of SU 100 were added in metal mixer which is pre-heated to 160°C. The mixture was stirred for 120 min until homogeneous with a vacuuming system to protect the sample from oxidation as well as to remove bubbles. The obtained hot melt adhesive composition was light colour liquid at 160°C and could be poured out onto a release film and cooled down to become solid.

### Comparative Example 3

18 g of LP 150, 0.5 g of Evernox 10GF, 0.5 g of Everfos 168GF, 23 g of Kraton MD 1653, 58 g of SU 100 were added in metal mixer which is pre-heated to 160°C. The mixture was stirred for 120 min until homogeneous with a vacuuming system to protect the sample from oxidation as well as to remove bubbles. The obtained hot melt adhesive composition was light colour liquid at 160°C and could be poured out onto a release film and cooled down to become solid.

### Comparative Example 5

18 g of LP 150, 0.5 g of Evernox 10GF, 0.5 g of Everfos 168GF, 23 g of Kraton D1162PT, 58 g of SU 100 were added in metal mixer which is pre-heated to 160°C. The mixture was stirred for 120 min until homogeneous with a vacuuming system to protect the sample from oxidation as well as to remove bubbles. The obtained hot melt adhesive composition was light colour liquid at 160°C and could be poured out onto a release film and cooled down to become solid.

### Comparative Example 7

18 g of LP 150, 0.5 g of Evernox 10GF, 0.5 g of Everfos 168GF, 23 g of Taipol 4230, 58 g of SU 100 were added in metal mixer which is pre-heated to 160°C. The mixture was stirred for 120 min until homogeneous with a vacuuming system to protect the sample from oxidation as well as to remove bubbles. The obtained hot melt adhesive composition was light colour liquid at 160°C and could be poured out onto a release film and cooled down to become solid.

### Comparative Example 8

25 g of LP 150, 0.5 g of Evernox 10GF, 0.5 g of Everfos 168GF, 15 g of Kraton MD 1648, 59 g of SU 100 were added in metal mixer which is pre-heated to 160°C. The mixture was stirred for 120 min until homogeneous with a vacuuming system to protect the sample from oxidation as well as to remove bubbles. The obtained hot melt adhesive composition was light colour liquid at 160°C and could be poured out onto a release film and cooled down to become solid.

### Inventive Example 9

17 g of LP 150, 0.5 g of Evernox 10GF, 0.5 g of Everfos 168GF, 19 g of Kraton MD 1648, 63 g of SU 100 were added in metal mixer which is pre-heated to 160°C. The mixture was stirred for 120 min until homogeneous with a vacuuming system to protect the sample from oxidation as well as to remove bubbles. The obtained hot melt adhesive composition was light colour liquid at 160°C and could be poured out onto a release film and cooled down to become solid.

### Comparative Example 10

20 g of LP 150, 0.5 g of Evernox 10GF, 0.5 g of Everfos 168GF, 18 g of Kraton MD 1648,12 g of Aerafin 17, 49 g of SU 100 were added in metal mixer which is pre-heated to 160°C. The mixture was stirred for 120 min until homogeneous with a vacuuming system to protect the sample from oxidation as well as to remove bubbles. The obtained hot melt adhesive composition was light colour liquid at 160°C and could be poured out onto a release film and cooled down to become solid.

### Performance evaluation

### Melt viscosity

The melt viscosity of hot melt adhesive composition in the present invention was measured by using a Brookfield rotational viscometer (digital Brookfield viscometer, DV-II+, available from BROOKFIELD, US) with spindles at 140 °C according to ASTM D1084-1997.

### Odor

The odor of the cured product of the hot melt adhesive compositions was measured as follows. Weighted out 100 grams of hot melt adhesive composition and placed the composition in a 250 ml glass jar. Covered the glass jar with aluminum foil and heated the glass jar at 160°C for 2 hours. Took out the glass jar and cooled the glass jar to 25 °C. Reheated the glass jar for to 70 °C for 1 hour. Took out the glass jar and cooled the glass jar to 25 °C.

Organized a group of five test panel members. The test panel members were selected with no smoking or drinking habits. Each test panel member was given a glass jar containing the identical hot melt adhesive prepared by the method stated above. The test panel member removed the aluminum foil and smelled the odor from the glass jar at a distance of 5 cm from the opening of the glass jar. Each test panel member assigned a score of the odor from the glass jar independently. The average score of the five test panel members was the odor score for the hot melt adhesive.

The criteria for the test panel member to assign a score to the hot melt adhesive are:
a hot melt adhesive with no odor was assigned with a score of 1;
a hot melt adhesive with slight but detectable odor was assigned with a score of 2;
a hot melt adhesive with some odor but not strong was assigned with a score of 3;
a hot melt adhesive with strong odor was assigned with a score of 4; and
a hot melt adhesive with pungent odor was assigned with a score of 5.

### Peel Strength of adhesion to PE plate

50 gsm of each hot melt adhesive composition was coated onto PET film to form a smooth hot melt film, covered with release film. Each sample was cooled to room temperature for 24 hours. Then the release film was removed, and the hot melt adhesive layer was adhered to a clean polyethylene plate, laminated with a 2 kg roller back and forth with a speed of 300 mm/min. The laminated sample was dwelled for 30 min and then the peel strength at 180° was tested on an Instron 3365 tensile strength tester with a speed of 50 mm/min.

### Peel strength with PE film and non-woven hydrophilic fabric

A PE sheet (Air permeable cast film with a thickness of 18 gsm from Foshan Landi) and a non-woven hydrophilic fabric sheet (hot air non-woven fabric 2AT-25 with a thickness of 25 gsm from Nanliu Corporation) were adhered together to form a laminate sample by applying the hot melt adhesive composition between the two sheets at 2 gsm via a summit nozzle head between 130 to 160°C. The so-called summit nozzle has tiny holes for adhesive composition to be sprayed out. Hot air came out in the same direction with the adhesive composition, surrounding the adhesive composition to assist the adhesive composition to be sprayed into a circular pattern like the shape of a spring. Width of the adhesive composition was very thin due to the high speed of hot air. The whole spray system including melting tank, hose and nozzle with summit pattern can be provided by Nortson Corp. The PE sheet and the non-woven hydrophilic fabric sheet were peeled from one another at an angle of 180° and with a rate of 300 mm/min using Instron 3365 tensile strength tester. The peel strength was carried out at 25°C and 50% relative humidity. The peel strength was made to the laminate sample at least 24 hours after the hot melt adhesive composition was applied. The PE sheet and the non-woven hydrophilic fabric sheet were pulled 10 cm apart and the force was recorded as the peel strength of the hot melt adhesive composition for adhering PE and non-woven hydrophilic fabric, commonly used as topsheet in disposable absorbent articles.

### Peel strength with PE film and non-woven hydrophobic fabric

A PE sheet (Air permeable cast film with a thickness of 18 gsm from Foshan Landi) and a non-woven hydrophobic fabric sheet (SS non-woven fabric with a thickness of 15 gsm from JOFO Nonwoven Ltd.) were adhered together to form a laminate sample by applying the hot melt adhesive between the two sheets at 2 gsm via summit nozzle head between 130 to 160°C. The PE sheet and the non-woven hydrophobic fabric sheet were peeled from one another at an angle of 180° and with a rate of 300 mm/min using Instron 3365 tensile strength tester. The peel strengthwas carried out at 25°C and 50% relative humidity. The peel strengthwas made to the laminate sample at least 24 hours after the hot melt adhesive composition was applied. The PE sheet and the non-woven hydrophobic fabric sheet were pulled 10 cm apart and the force was recorded as the peel strength of the hot melt adhesive composition for adhering PE and non-woven hydrophobic fabric, commonly used as backsheet in disposable absorbent articles.

The test results of the performance evaluation on the inventive and comparative hot melt adhesive compositions are shown in Tables 1 and 2, respectively.

**Table 1. Test results of examples 1 to 6**

| Test Item | Ex 1 | Ex 2 | Ex 3 | Ex 4 | Ex 5 | Ex 6 |
|---|---|---|---|---|---|---|
| Viscosity@140°C (mPa·s [cPs]) | 1070 | 1000 | 2050 | 3000 | 2700 | 2100 |
| Softening point (°C) | 71 | 81 | 73 | 82 | 77 | 71 |
| Odour value | 2.15 | 2.15 | 2.10 | 2.20 | 2.25 | 2.00 |
| Peel strength Adhesion to PE plate (N/m [N/inch], 50 gsm) | 626.0 [15.9] | 602.4 [15.3] | 614.2 [15.6] | 476.4 [12.1] | 563.0 [14.3] | 661.4 [16.8] |
| Peel strength by summit spraying: PE film to topsheet (N/m [N/inch], 2 gsm₎ | 32.7 [0.83] | 31.9 [0.81] | 32.3 [0.82] | 26.4 [0.67] | 31.1 [0.79] | N.D. |
| Peel strength by summit spraying: PE film to backsheet (N/m [N/inch], 2 gsm) | 40.2 [1.02] | 38.6 [0.98] | 39.0 [0.99] | 31.1 [0.79] | 36.2 [0.92] | N.D. |

**Table 2. Test results of comparative examples (CE 9 is an inventive example)**

| Test Item | CE 1 | CE 2 | CE 3 | CE 4 | CE 5 | CE 6 | CE 7 | CE 8 | CE 9 | CE 10 |
|---|---|---|---|---|---|---|---|---|---|---|
| Viscosity@140°C (mPa·s [cPs]) | 4150 | 6200 | 4800 | 15400 | 4900 | 12300 | 8700 | 760 | 2350 | 3900 |
| Softening point (°C) | 85 | 89 | 89 | 92 | 100 | 95 | 99 | 59 | 77 | 88 |
| Odour value | 2.25 | 2.3 | 2.3 | 2.3 | 2.6 | 2.65 | 2.63 | 2.15 | 2.0 | 2.2 |
| Peel strength Adhesion to PE plate (N/m [N/inch], 50 gsm) | 397.6 [10.1] | 232.3 [5.9] | 421.3 [10.7] | 401.6 [10.2] | 468.5 [11.9] | 397.6 [10.1] | 318.9 [8.1] | 374.0 [9.5] | 248.0 [6.3] | 342.5 [8.7] |
| Peel strength by summit spraying: PE film to topsheet (N/m [N/inch], 2 gsm) | 20.5 [0.52] | 15.4 [0.39] | 20.1 [0.51] | 19.3 [0.49] | 21.7 [0.55] | 20.1 [0.51] | 16.9 [0.43] | N.D. | 13.0 [0.33] | N.D. |
| Peel strength by summit spraying: PE film to backsheet (N/m [N/inch], 2 gsm) | 24.8 [0.63] | 17.3 [0.44] | 20.9 [0.53] | 18.9 [0.48] | 22.4 [0.57] | 20.5 [0.52] | 16.1 [0.41] | N.D. | 11.4 [0.29] | N.D. |

As shown in Tables 1 and 2, the hot melt adhesive composition of the present invention exhibited an excellent property profile including melt viscosity, softening point, odour and peel strength. Compared to the inventive examples, the comparative compositions containing higher amount of SEBS block copolymer (CEs 1 and 2), SEBS block copolymer having higher melt index (CE 3), SEBS block copolymer having higher diblock content (CE 4), only SIS block copolymer (CEs 5 and 6), only SBS block copolymer (CE 7), lower amount of SEBS block copolymer (CE 8), higher amount of tackifier (CE 9), higher amount of polyolefin in addition to SEBS block copolymer (CE 10) could not achieve at least one of the desired properties.

## Claims

1. A hot melt adhesive composition, comprising,
(1) 16% to 30% by weight of a styrene block copolymer, having a saturated midblock, a melt flow rate of at least 25 g/10 minutes (190°C, 2.16 kg) and a diblock content of no greater than 10% by weight,
(2) 40% to 65% by weight of a tackifier,
(3) 5% to 30% by weight of a plasticizer, and
(4) 0% to 10% by weight of a polyolefin,
wherein the weight ratios of the components are based on the total weight of the hot melt adhesive composition.

2. The hot melt adhesive composition according to claim 1, wherein the weight ratio of the styrene block copolymer is from 20% to 28% by weight.

3. The hot melt adhesive composition according to claim 1 or 2, wherein the weight ratio of the tackifier is from 53% to 62% by weight and/or wherein the weight ratio of the plasticizer is from 15% to 20% by weight.

4. The hot melt adhesive composition according to any of the preceding claims, wherein the styrene block copolymer has a styrene content of at least 18% by weight, preferably from 18% to 25% by weight.

5. The hot melt adhesive composition according to any of the preceding claims, wherein the styrene block copolymer has a diblock content of no greater than 5% by weight.

6. The hot melt adhesive composition according to any of the preceding claims, wherein the styrene block copolymer has a melt flow rate of from 25 g/10 minutes (190°C, 2.16 kg) to 200 g/10 minutes (190°C, 2.16 kg).

7. The hot melt adhesive composition according to any of the preceding claims, wherein the tackifier is selected from the group consisting of aliphatic C5 resins, aliphatic resins, dicyclopentadiene resins, C5/C9 blended resins and mixtures thereof.

8. The hot melt adhesive composition according to any of the preceding claims, wherein the polyolefin is selected from at least one of polyethylene, polypropylene, polybutene, and the copolymers and terpolymers thereof.

9. The hot melt adhesive composition according to any of the preceding claims, wherein the melt viscosity of the hot melt adhesive composition is no greater than 4 Pas (4,000 centipoises), and preferably no greater than 3.5 Pas (3,500 centipoises) at 140°C.

10. The hot melt adhesive composition according to any of the preceding claims, wherein the softening point of the hot melt adhesive composition is no less than 60°C, and preferably no less than 70°C.

11. The hot melt adhesive composition according to any of the preceding claims, wherein the peel strength to polyethylene of the hot adhesive composition is no less than 10N/2.54 cm (10 N/inch), when cured at 140°C with a coating weight of 50 gsm.

12. The hot melt adhesive composition according to any of the preceding claims, wherein the peel strength to polyethylene/topsheet of the hot adhesive composition by summit spraying is no less than 0.6 N/2.54 cm (0.6 N/inch), when cured at 140°C with a coating weight of 2 gsm.

13. The hot melt adhesive composition according to any of the preceding claims, wherein the peel strength to polyethylene/backsheet of the hot adhesive composition by summit spraying is no less than 0.7 N/2.54 cm (0.7 N/inch), when cured at 140°C with a coating weight of 2 gsm.

14. A disposable absorbent article comprising a cured product of the hot melt adhesive composition according to any of the preceding claims.

15. The disposable absorbent article of claim 14, which is selected from the group consisting of baby diapers, feminine napkins and adult incontinent articles.

## Patentansprüche

1. Heißschmelzklebstoffzusammensetzung, umfassend,
(1) zu 16 Gew.-% bis 30 Gew.-% ein Styrolblockcopolymer, das einen gesättigten Mittelblock, eine Schmelzflussrate von mindestens 25 g/10 Minuten (190 °C, 2,16 kg) und einen Diblockgehalt von nicht mehr als 10 Gew.-% aufweist,
(2) zu 40 Gew.-% bis 65 Gew.-% einen Klebrigmacher,
(3) zu 5 Gew.-% bis 30 Gew.-% einen Weichmacher und
(4) zu 0 Gew.-% bis 10 Gew.-% ein Polyolefin,
wobei die Gewichtsverhältnisse der Komponenten auf dem Gesamtgewicht der Heißschmelzklebstoffzusammensetzung basieren.

2. Heißschmelzklebstoffzusammensetzung nach Anspruch 1, wobei das Gewichtsverhältnis des Styrolblockcopolymers von 20 Gew.-% bis 28 Gew.-% beträgt.

3. Heißschmelzklebstoffzusammensetzung nach Anspruch 1 oder 2, wobei das Gewichtsverhältnis des Klebrigmachers von 53 Gew.-% bis 62 Gew.-% beträgt und/oder wobei das Gewichtsverhältnis des Weichmachers von 15 Gew.-% bis 20 Gew.-% beträgt.

4. Heißschmelzklebstoffzusammensetzung nach einem der vorstehenden Ansprüche, wobei das Styrolblockcopolymer einen Styrolgehalt von mindestens 18 Gew.-%, vorzugsweise von 18 Gew.-% bis 25 Gew.-% aufweist.

5. Heißschmelzklebstoffzusammensetzung nach einem der vorstehenden Ansprüche, wobei das Styrolblockcopolymer einen Diblockgehalt von nicht mehr als 5 Gew.-% aufweist.

6. Heißschmelzklebstoffzusammensetzung nach einem der vorstehenden Ansprüche, wobei das Styrolblockcopolymer eine Schmelzflussrate von 25 g/10 Minuten (190 °C, 2,16 kg) bis 200 g/10 Minuten (190 °C, 2,16 kg) aufweist.

7. Heißschmelzklebstoffzusammensetzung nach einem der vorstehenden Ansprüche, wobei der Klebrigmacher aus der Gruppe ausgewählt ist, bestehend aus aliphatischen C5-Harzen, aliphatischen Harzen, Dicyclopentadienharzen, C5/C9-Mischharzen und Mischungen davon.

8. Heißschmelzklebstoffzusammensetzung nach einem der vorstehenden Ansprüche, wobei das Polyolefin aus mindestens einem ausgewählt ist von Polyethylen, Polypropylen, Polybuten und Copolymeren und Terpolymeren davon.

9. Heißschmelzklebstoffzusammensetzung nach einem der vorstehenden Ansprüche, wobei die Schmelzviskosität der Heißschmelzklebstoffzusammensetzung nicht größer als 4 Pas (4.000 Centipoise) bei 140 °C und vorzugsweise nicht größer als 3,5 Pas (3.500 Centipoise) ist.

10. Heißschmelzklebstoffzusammensetzung nach einem der vorstehenden Ansprüche, wobei der Erweichungspunkt der Heißschmelzklebstoffzusammensetzung nicht weniger als 60 °C und vorzugsweise nicht weniger als 70 °C beträgt.

11. Heißschmelzklebstoffzusammensetzung nach einem der vorstehenden Ansprüche, wobei die Abziehfestigkeit der Heißklebstoffzusammensetzung gegenüber Polyethylen nicht weniger als 10 N/2,54 cm (10 N/Zoll) beträgt, wenn bei 140 °C mit einem Beschichtungsgewicht von 50 g/m² ausgehärtet wird.

12. Heißschmelzklebstoffzusammensetzung nach einem der vorstehenden Ansprüche, wobei die Abziehfestigkeit der Heißklebstoffzusammensetzung gegenüber Polyethylen/Deckfolie durch Gipfelsprühen nicht weniger als 0,6 N/2,54 cm (0,6 N/Zoll) beträgt, wenn bei 140 °C mit einem Beschichtungsgewicht von 2 g/m² ausgehärtet wird.

13. Heißschmelzklebstoffzusammensetzung gemäß einem der vorstehenden Ansprüche, wobei die Abziehfestigkeit der Heißklebstoffzusammensetzung gegenüber Polyethylen/Trägerfolie durch Gipfelsprühen nicht weniger als 0,7 N/2,54 cm (0,7 N/Zoll) beträgt, wenn bei 140 °C mit einem Beschichtungsgewicht von 2 g/m² ausgehärtet wird.

14. Saugfähiges Einwegerzeugnis, umfassend ein ausgehärtetes Produkt der Heißschmelzklebstoffzusammensetzung nach einem der vorstehenden Ansprüche.

15. Saugfähiges Einwegerzeugnis nach Anspruch 14, das aus der Gruppe ausgewählt ist, bestehend aus Babywindeln, Damenbinden und Inkontinenzerzeugnisse für Erwachsene.

## Revendications

1. Composition d'adhésif thermofusible, comprenant,
(1) 16 % à 30 % en poids d'un copolymère à blocs de styrène, ayant un bloc intermédiaire saturé, un indice de fluidité à l'état fondu d'au moins 25 g/10 minutes (190 °C, 2,16 kg) et une teneur en diblocs non supérieure à 10 % en poids,
(2) 40 % à 65 % en poids d'un agent collant,
(3) 5 % à 30 % en poids d'un plastifiant, et
(4) 0 % à 10 % en poids d'une polyoléfine,
dans laquelle les rapports en poids des composants sont basés sur le poids total de la composition d'adhésif thermofusible.

2. Composition d'adhésif thermofusible selon la revendication 1, dans laquelle le rapport en poids du copolymère à blocs de styrène va de 20 % à 28 % en poids.

3. Composition d'adhésif thermofusible selon la revendication 1 ou 2, dans laquelle le rapport en poids de l'agent collant va de 53 % à 62 % en poids et/ou dans laquelle le rapport en poids du plastifiant va de 15 % à 20 % en poids.

4. Composition d'adhésif thermofusible selon l'une quelconque des revendications précédentes, dans laquelle le copolymère à blocs de styrène a une teneur en styrène d'au moins 18 % en poids, de préférence de 18 % à 25 % en poids.

5. Composition d'adhésif thermofusible selon l'une quelconque des revendications précédentes, dans laquelle le copolymère à blocs de styrène a une teneur en diblocs non supérieure à 5 % en poids.

6. Composition d'adhésif thermofusible selon l'une quelconque des revendications précédentes, dans laquelle le copolymère à blocs de styrène a un indice de fluidité à l'état fondu allant de 25 g/10 minutes (190 °C, 2,16 kg) à 200 g/10 minutes (190 °C, 2,16 kg).

7. Composition d'adhésif thermofusible selon l'une quelconque des revendications précédentes, dans laquelle l'agent collant est choisi dans le groupe constitué de résines aliphatiques en C5, résines aliphatiques, résines dicyclopentadiéniques, résines mélangées en C5/C9 et mélanges de celles-ci.

8. Composition d'adhésif thermofusible selon l'une quelconque des revendications précédentes, dans laquelle la polyoléfine est choisie parmi au moins l'un de polyéthylène, polypropylène, polybutène, et copolymères et terpolymères de ceux-ci.

9. Composition d'adhésif thermofusible selon l'une quelconque des revendications précédentes, dans laquelle la viscosité à l'état fondu de la composition d'adhésif thermofusible n'est pas supérieure à 4 Pas (4 000 centipoises), et de préférence pas supérieure à 3,5 Pas (3 500 centipoises) à 140 °C.

10. Composition d'adhésif thermofusible selon l'une quelconque des revendications précédentes, dans laquelle le point de ramollissement de la composition d'adhésif thermofusible n'est pas inférieur à 60 °C, et de préférence pas inférieur à 70 °C.

11. Composition d'adhésif thermofusible selon l'une quelconque des revendications précédentes, dans laquelle la résistance au pelage du polyéthylène de la composition d'adhésif thermofusible n'est pas inférieure à 10 N/2,54 cm (10 N/pouce), lorsqu'elle est durcie à 140 °C avec un poids d'enduction de 50 g/m².

12. Composition d'adhésif thermofusible selon l'une quelconque des revendications précédentes, dans laquelle la résistance au pelage du polyéthylène/de la feuille supérieure de la composition d'adhésif thermofusible par pulvérisation au sommet n'est pas inférieure à 0,6 N/2,54 cm (0,6 N/pouce), lorsqu'elle est durcie à 140 °C avec un poids d'enduction de 2 g/m².

13. Composition d'adhésif thermofusible selon l'une quelconque des revendications précédentes, dans laquelle la résistance au pelage du polyéthylène/de la feuille arrière de la composition d'adhésif thermofusible par pulvérisation au sommet n'est pas inférieure à 0,7 N/2,54 cm (0,7 N/pouce), lorsqu'elle est durcie à 140 °C avec un poids d'enduction de 2 g/m².

14. Article absorbant jetable comprenant un produit durci de la composition d'adhésif thermofusible selon l'une quelconque des revendications précédentes.

15. Article absorbant jetable selon la revendication 14, qui est choisi dans le groupe constitué de couches pour bébés, serviettes féminines et articles pour l'incontinence chez l'adulte.
